# EUROPEAN PATENT APPLICATION

(11) **EP 2 613 266 A1**
(43) Date of publication of application: **10.07.2013**
(21) Application number: 11821582.1
(22) Date of filing: 22.08.2011
(51) Int. Cl.: G06F 13/00, H04N 7/173

(54) **RECEIVER DEVICE, RECEIVING METHOD, PROGRAM, AND BROADCASTING SYSTEM**

(30) Priority: 29.12.2010 US 980917; 30.08.2010 US 378277 P
(71) Applicant: Sony Corporation, Tokyo 108-0075 (JP)
(72) Inventor: DEWA Yoshiharu, Tokyo 108-0075 (JP)
(74) Representative: Körber, Martin Hans
(86) International application number: PCT/JP2011/068834
(87) International publication number: WO 2012/029565

(57) **Abstract**

This invention relates to a reception apparatus, a reception method, a program, and a broadcasting system capable of preventing any process not intended by a user from being performed where a data broadcast service is implemented through transitions of documents.

It is determined whether the domain name of the server from which the HTML document to be executed has been acquired coincides with the domain name "www.a.com" of the server managed by broadcasting organizations. Depending on the result of the determination, specific processes are allowed to be performed (or prevented from being performed). This invention may be applied when data broadcasting is implemented in the United States for example.

## Description

### [Technical Field]

This invention relates to a reception apparatus, a reception method, a program, and a broadcasting system. More particularly, the invention relates to a reception apparatus, a reception method, a program, and a broadcasting system suitable for use in executing data broadcast content in linkage with the progress of AV content constituting so-called TV programs typically in digital TV broadcasting.

### [Background Art]

The digitization of TV broadcasting has been promoted in Japan, and digital terrestrial broadcasting, BS digital broadcasting and the like have gained widespread acceptance in the country. Also, in digital TV broadcasting such as terrestrial digital broadcasting, not only the broadcasting of AV content making up so-called TV programs but also data broadcasting using BML (Broadcast Markup Language) has been implemented (e.g., see Patent Literature 1).

For example, a TV set capable of receiving data broadcasting can display information about the currently broadcast program (AV content) as well as information not related to the ongoing program (announcements of other programs, news, weather reports, traffic information, etc.), and execute an application program linked to the program being broadcast (AV content).

Also, the above-mentioned TV set is configured to behave differently in two cases: when implementing services managed by the broadcasting organization offering digital TV broadcasting (e.g., the service of displaying weather reports), and when carrying out services not managed by broadcasting organizations (e.g., the service of connecting to the Internet to display Web pages, etc.).

That is, when weather reports are to be displayed in data broadcasting as one of the services managed by the broadcasting organization for example, processes may be carried out to read from the TV set pre-registered information about the area where the user lives so that weather reports corresponding to the place where the user lives is displayed.

On the other hand, when Web pages are to be displayed through connection with the Internet as one of the services not managed by broadcasting organizations for example, the above-mentioned read process or the like is not performed so that any process not intended by the user (e.g., process in which the area information may be fraudulently read and sent to a malicious third party) will not be carried out.

Likewise in Europe, a type of broadcasting corresponding to data broadcasting in Japan has been implemented in accordance with DVB-MHP (digital video broadcasting-multimedia home platform) that stipulates how data broadcast content should be described and distributed.

### [Citation List]

### [Patent Literature]

[PTL 1] JP 2003-131981A

### [Summary]

### [Technical Problem]

Meanwhile, in digital TV broadcasting in the United States as per ATSC (Advanced Television Systems Committee) 2.0, a service corresponding to data broadcasting in digital TV broadcasting in Japan is scheduled to be implemented through acquisition of HTML documents described in HTML (Hyper Text Markup Language) from servers managed by broadcasting organizations.

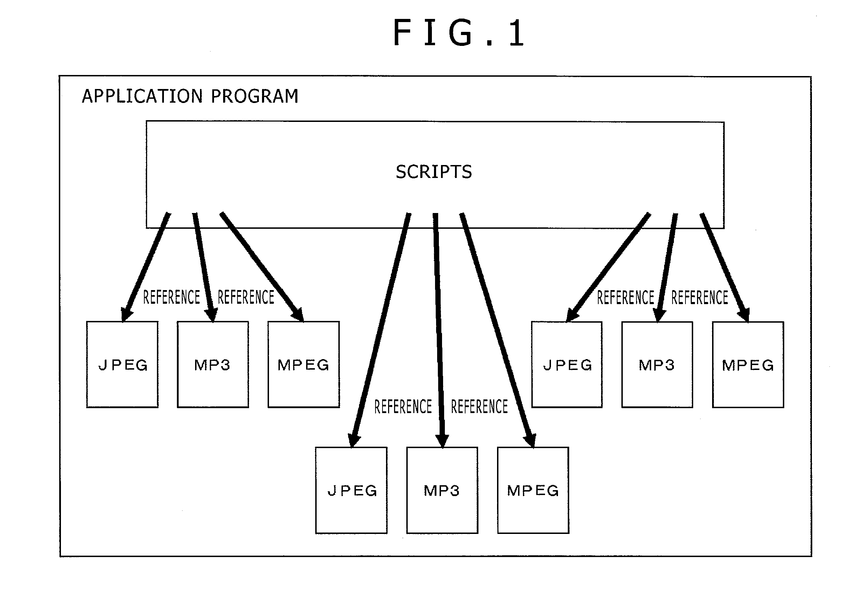

Suppose that as shown in Fig. 1, the service is implemented using an application program composed of the resources representing pictures, sounds, still images, etc., (corresponding to MPEG, MP3 and JPEG in Fig. 1) as well as scripts (executable codes) for executing predetermined processes by referencing the resources. In that case, operation modes may be set in the application program or the like and, in accordance with the operation modes thus established, specific processes such as the read process may be enabled (or restricted).

Specifically, in the case of an application program acquired from a server managed by the broadcasting organization, an operation mode may be set to enable (not restrict) the execution of a specific process. And in the case of an application program acquired from a server on the Internet not managed by broadcasting organizations, an operation mode may be set to disable (restrict) the execution of a specific process.

Application programs such as one shown in Fig. 1 may each be structured with, say, a plurality of class files (scripts) prepared in Java (registered trademark) and organized in a file structure called "jar" as well as with resources (pictures, sounds, still images, etc.).

If application programs are each structured with resources and scripts as shown in Fig. 1, the boundaries between the application programs are distinct. This makes it possible to set an operation mode in each application program to enable (or restrict) a specific process (read process, etc.).

By contrast, where HTML documents are used as scheduled for digital TV broadcasting in the United States, operation modes cannot be set in application programs such as one shown in Fig. 1.

For example, where the service is implemented using HTML documents, a single application program such as one in Fig. 1 is not executed. Instead, the HTML documents targeted to be executed make transition from one document to another, with each HTML document executed independently.

Consequently, no operation mode can be set in each HTML document executed independently as one application program for implementing the service.

For that reason, where HTML documents are used as scheduled in the United States, it is not possible to enable (or restrict) specific processes in accordance with operation modes; processes not intended by the user may well be carried out.

This invention has been made in view of the above circumstances and provides arrangements for preventing the processes not intended by the user from getting performed when a data broadcast service is implemented using document transitions.

### [Solution to Problem]

According to a first aspect of this invention, there is provided a reception apparatus for receiving AV content, including: acquisition means for acquiring a description document described in a programming language for displaying content from a server to which the reception apparatus is connected on a network; determination means for determining whether the acquired description document is from a first server managed by a broadcasting organization broadcasting the AV content, and control means for controlling the execution of the acquired description document in accordance with a result of the determination made by the determination means.

Preferably, the reception apparatus may further include extraction means for extracting from the AV content trigger information about the description document to be executed in linkage with the progress of the AV content; wherein, based on the trigger information, the acquisition means may acquire the description document from the first server, and wherein, in response to an operation performed by a user, the acquisition means may acquire the description document from a second server not managed by the broadcasting organization.

Preferably, the determination means may determine whether the acquired description document is from the first server depending on whether first identification information identifying the first server coincides with second identification information identifying the server from which the description document is acquired.

Preferably, the reception apparatus may further include determination means for determining as the first identification information the identification information identifying the destination from which to acquire the description document to be first executed in linkage with the progress of the AV content.

Preferably, the reception apparatus may further include execution means for executing the acquired description document; wherein, if the determination means determines that the description document is acquired from the first server managed by the broadcasting organization, the control means may control the execution means to operate in a first management mode in which a predetermined specific process can be processed through execution of the description document, and wherein, if the determination means determines that the description document is not acquired from the first server managed by the broadcasting organization, the control means may control the execution means to operate in a second management mode in which the predetermined specific process cannot be processed through execution of the description document.

Preferably, if the execution means is operating in the first management mode, the determination means may determine, every time the description document is acquired, whether the acquired description document is from the first server; and if the determination means determines that the description document is not acquired from the first server, the control means may control the execution means to exit the first management mode and operate in the second management mode.

Preferably, if the execution means is operating in the second operation mode, the control means may control the execution means to exit the second management mode and operate in the first management mode when the execution means executes the description document acquired from the first server.

Also according to the first aspect of this invention, there is provided a reception method for use with a reception apparatus receiving AV content, the reception method including: an acquisition step for causing the reception apparatus to acquire a description document described in a programming language for displaying content from a server to which the reception apparatus is connected on a network; a determination step for determining whether the acquired description document is from a first server managed by a broadcasting organization broadcasting the AV content, and a control step for controlling the execution of the acquired description document in accordance with a result of the determination made by the determination means.

Also according to the first aspect of this invention, there is provided a program for controlling a reception apparatus receiving AV content, the program causing a computer of the reception apparatus to execute a process including: an acquisition step for acquiring a description document described in a programming language for displaying content from a server to which the reception apparatus is connected on a network; a determination step for determining whether the acquired description document is from a first server managed by a broadcasting organization broadcasting the AV content, and a control step for controlling the execution of the acquired description document in accordance with a result of the determination made by the determination means.

Thus according to the first aspect of this invention, a description document described in a programming language for displaying content is acquired from the server to which the reception apparatus is connected on a network. It is determined whether the acquired description document is from a first server managed by a broadcasting organization broadcasting AV content. Depending on the result of the determination, the execution of the acquired description document is controlled.

According to a second aspect of this invention, there is provided a broadcasting system including a transmission apparatus transmitting AV content and a reception apparatus receiving the transmitted AV content; wherein the transmission apparatus includes: transmission means for transmitting trigger information included in the AV content from a server to which the reception apparatus is connected on a network, the trigger information being about a description document described in a programming language for displaying content, the description document being executed by the reception apparatus in linkage with the progress of the AV content, and wherein the reception apparatus includes: extraction means for extracting the trigger information from the AV content; acquisition means for acquiring, based on the extracted trigger information, the description document from a first server managed by a broadcasting organization broadcasting the AV content, the acquisition means further acquiring, in response to an operation performed by a user, the description document from a second server not managed by the broadcasting organization; determination means for determining whether the acquired description document is from the first server, and control means for controlling the execution of the acquired description document in accordance with a result of the determination made by the determination means.

Where the broadcasting system according to the second aspect of this invention is in use, the transmission apparatus transmits trigger information included in AV content from the server to which the reception apparatus is connected on a network, the trigger information being about a description document described in a programming language for displaying content, the description document being executed by the reception apparatus in linkage with the progress of the AV content. The reception apparatus extracts the trigger information from the AV content. Based on the extracted trigger information, the reception apparatus acquires the description document from a first server managed by a broadcasting organization broadcasting the AV content. In response to an operation performed by a user, the reception apparatus acquires the description document from a second server not managed by the broadcasting organization. It is determined whether the acquired description document is from the first server. In accordance with the result of the determination, the execution of the acquired description document is controlled.

### [Advantageous Effect of Invention]

According to this invention, it is thus possible to prevent any process not intended by the user from getting performed when a data broadcast service is implemented through transitions of documents.

### [Brief Description of Drawings]

[Fig. 1]
   Fig. 1 is a view showing a typical application program made up of resources and scripts.
[Fig. 2]

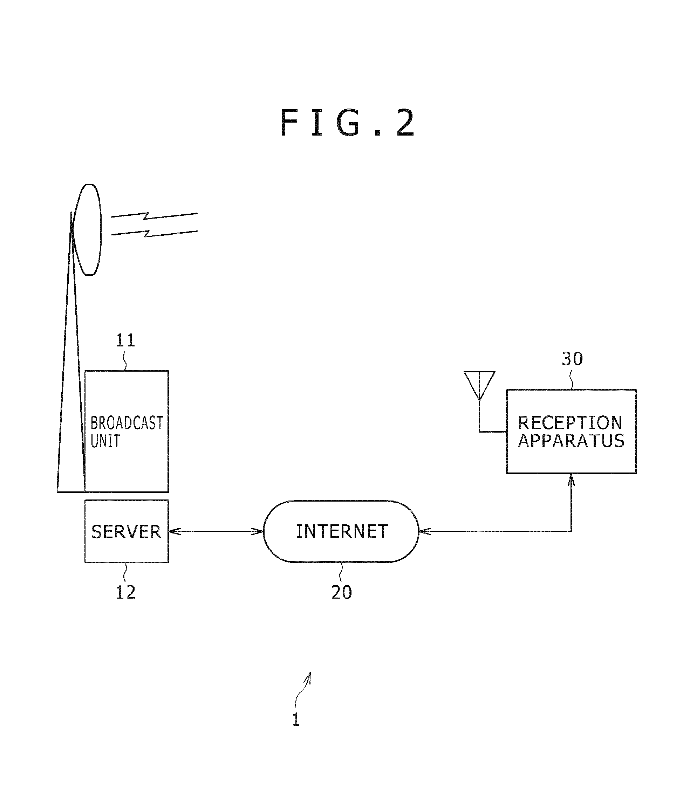

   Fig. 2 is a block diagram showing a typical broadcasting system as one embodiment of this invention.
[Fig. 3]

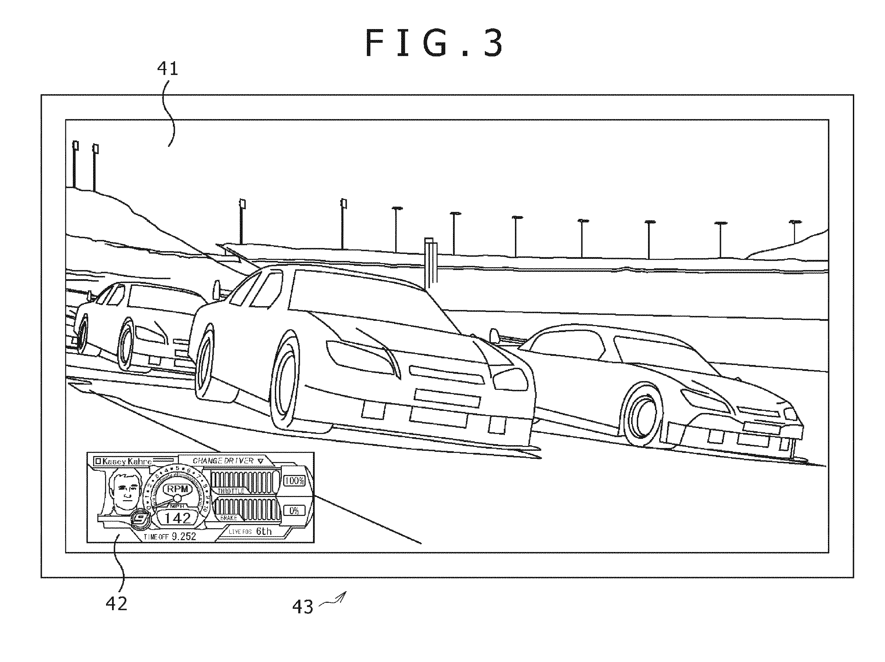

   Fig. 3 is a view showing a typical screen displayed on a monitor by a reception apparatus.
[Fig. 4]

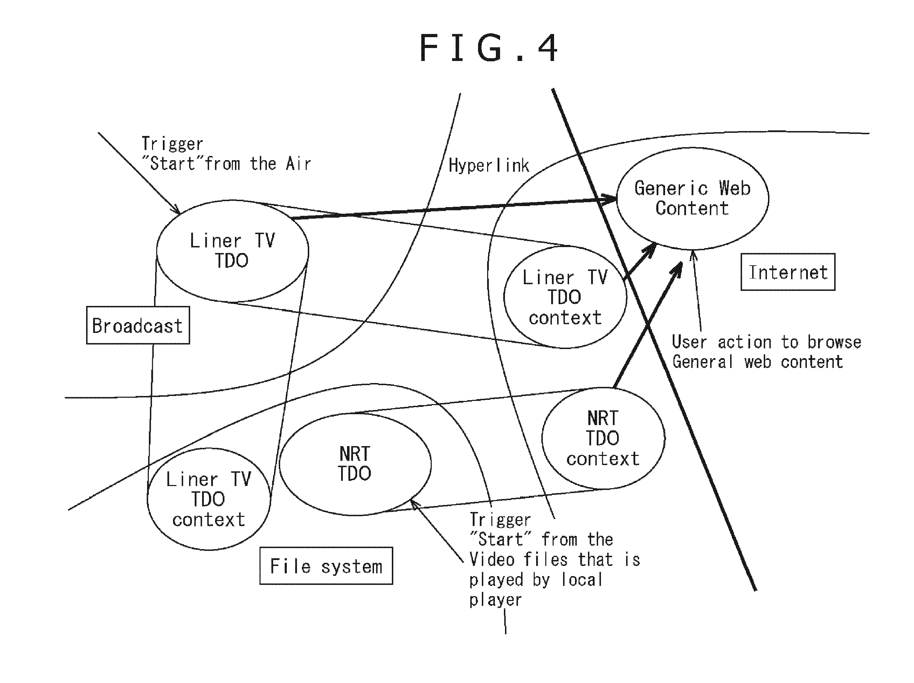

   Fig. 4 is an explanatory view outlining this invention.
[Fig. 5]

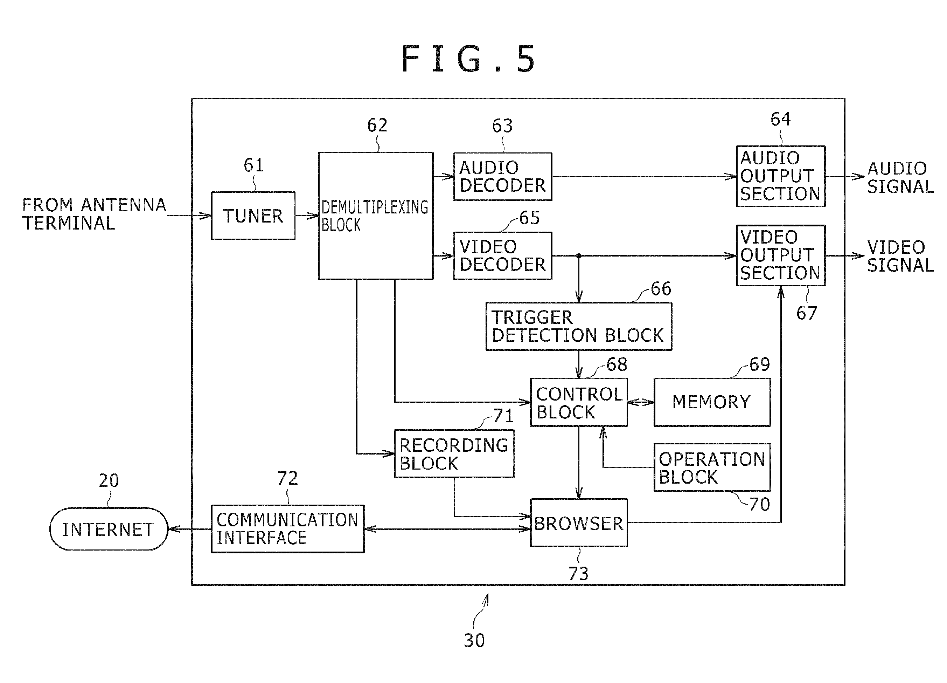

   Fig. 5 is a block diagram showing a typical structure of the reception apparatus.
[Fig. 6]

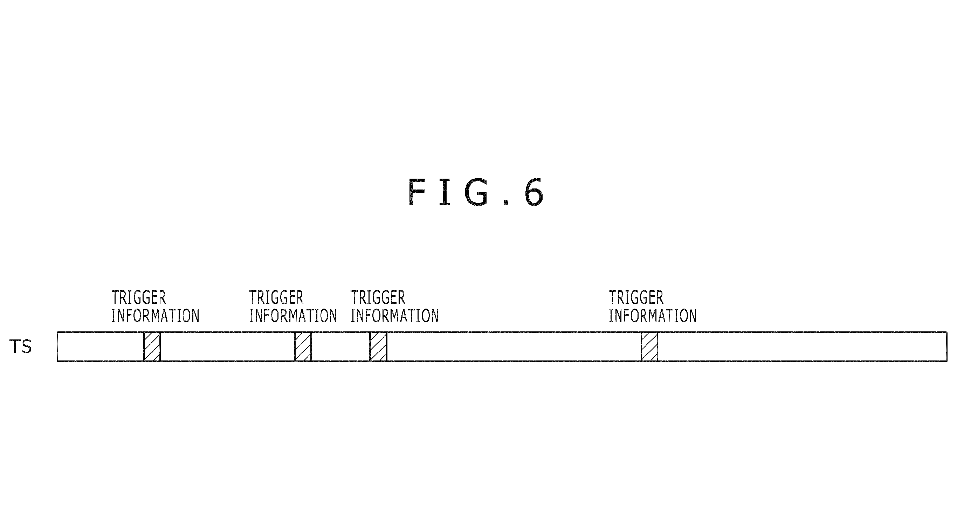

   Fig. 6 is a view illustrating the concept of trigger information being embedded in PCR packets of TS when transmitted.
[Fig. 7]

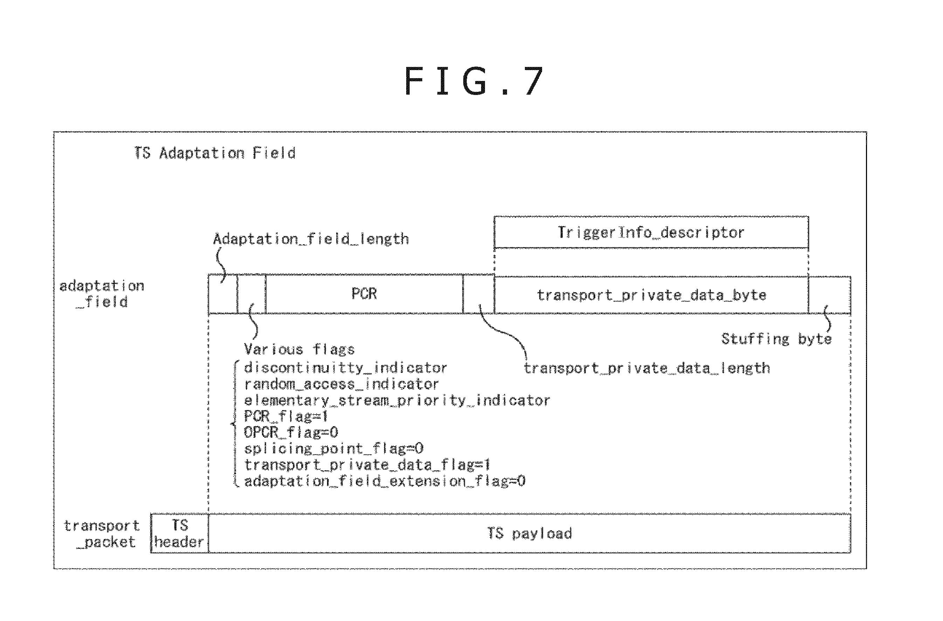

   Fig. 7 is a view showing where the trigger information is stored in a PCR packet.
[Fig. 8]

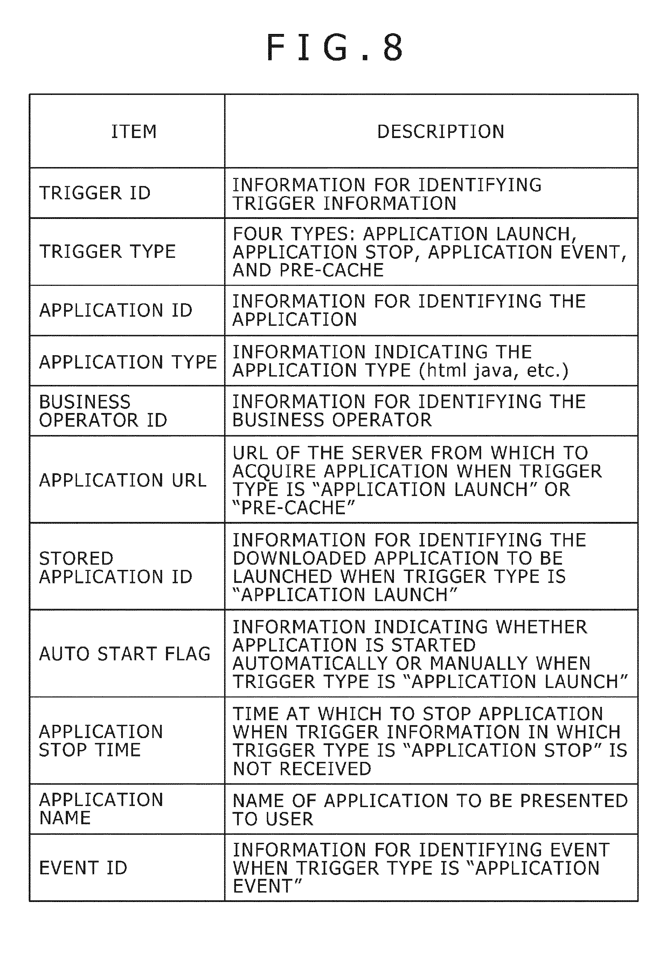

   Fig. 8 is a view listing typical information items included in the trigger information.
[Fig. 9]

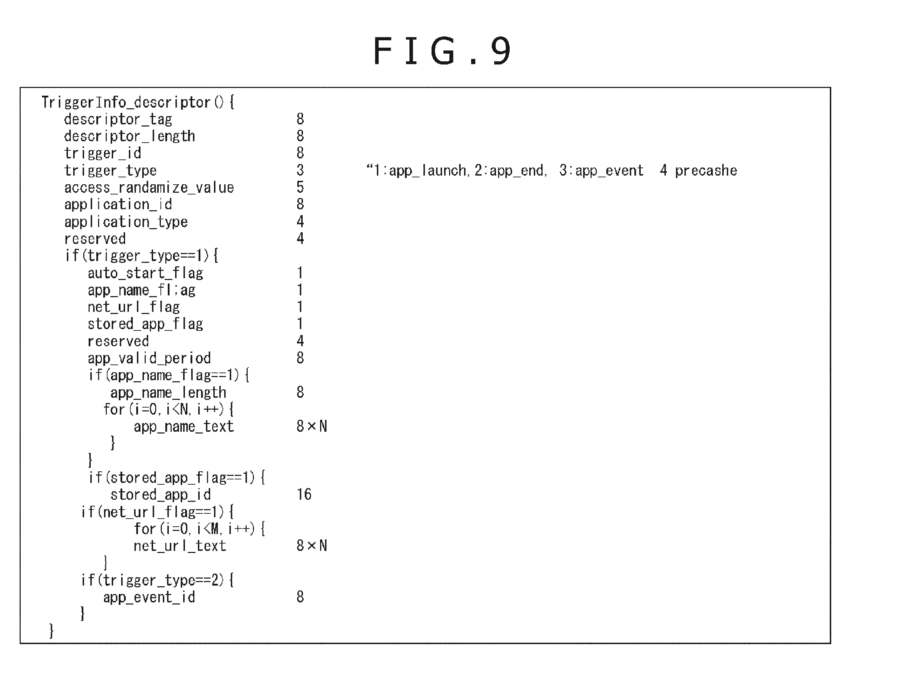

   Fig. 9 is a view showing a typical syntax of the trigger information.
[Fig. 10]

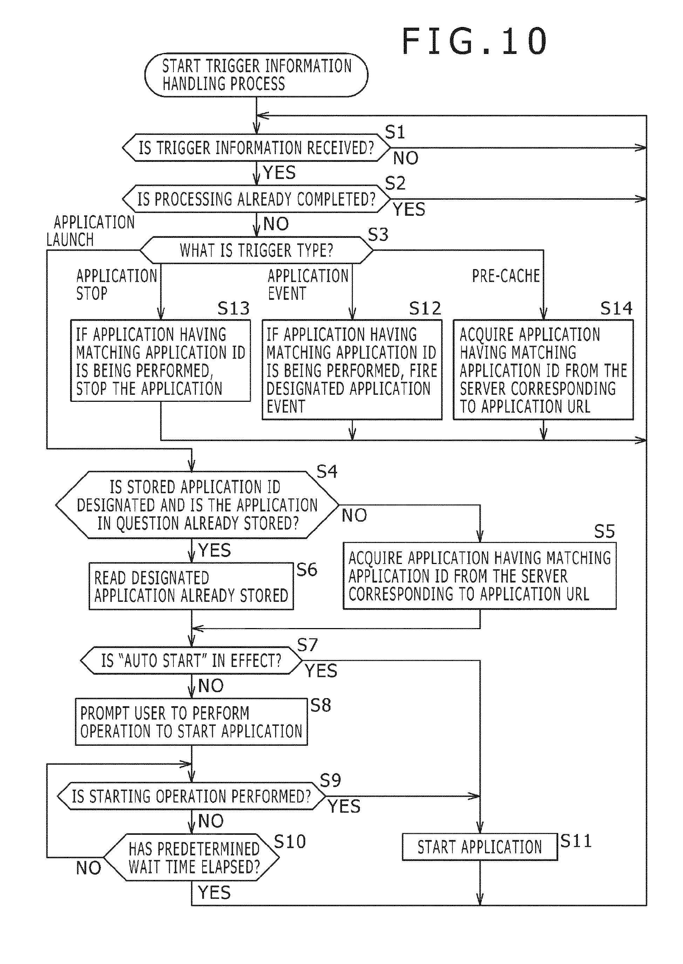

   Fig. 10 is a flowchart explaining a trigger information handling process performed by the reception apparatus.
[Fig. 11]

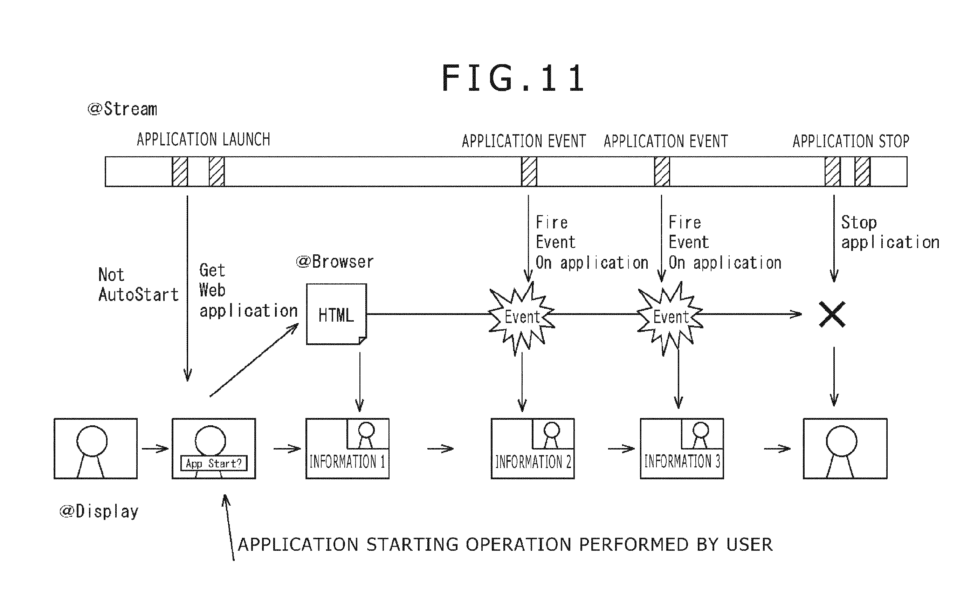

   Fig. 11 is a view showing typical screen transitions in effect when a data broadcast HTML document is executed in linkage with the progress of a TV program.
[Fig. 12]

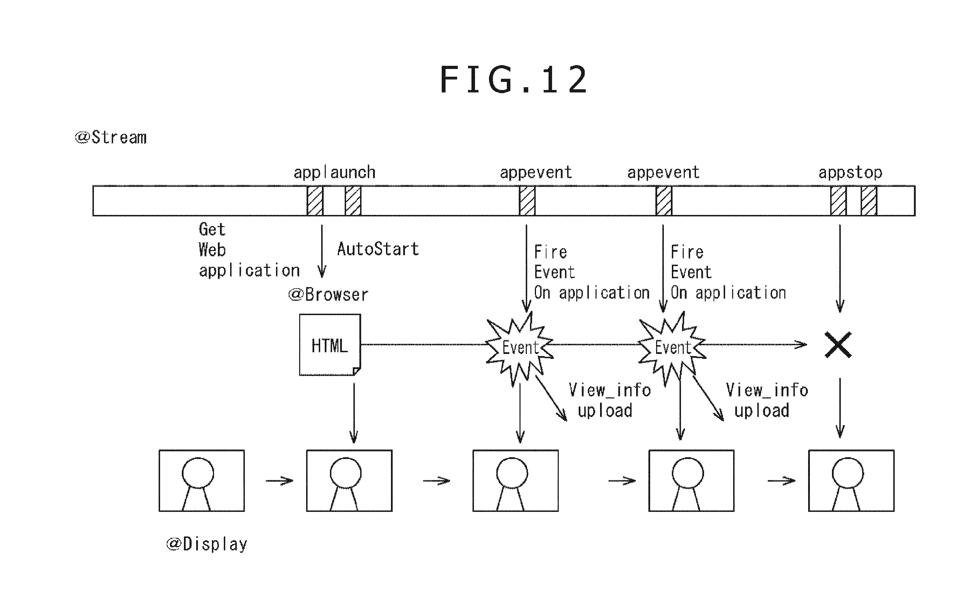

   Fig. 12 is a view showing typical screen transitions in effect when a data broadcast HTML document not entailing screen display is executed in linkage with the progress of a TV program.
[Fig. 13]

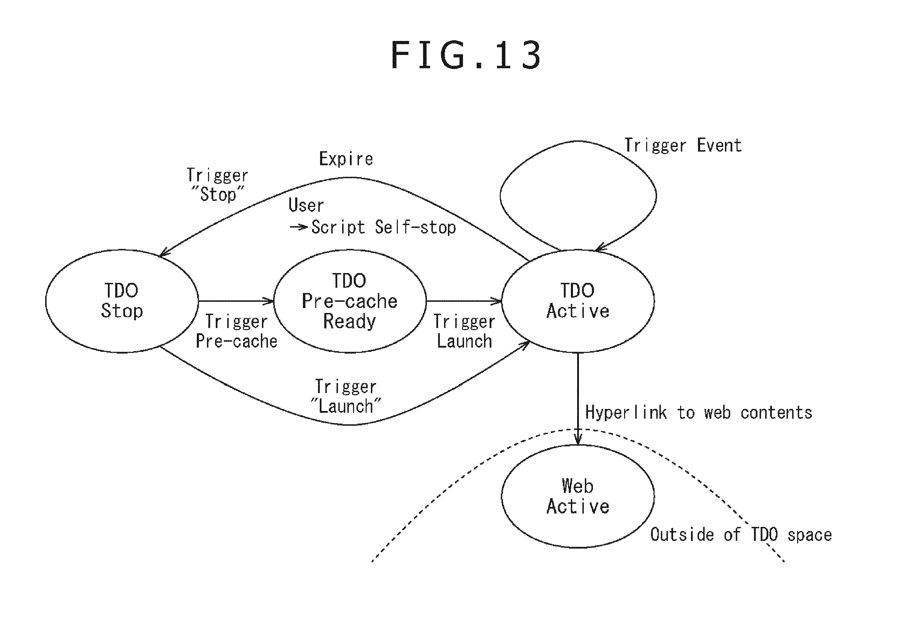

   Fig. 13 is a view showing a typical life cycle of the data broadcast HTML document.
[Fig. 14]

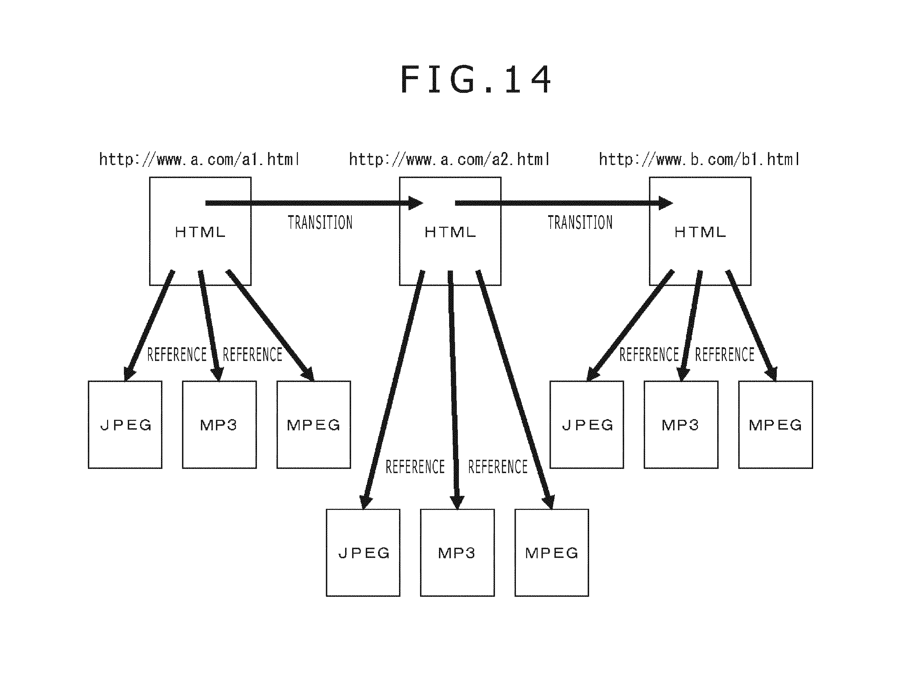

   Fig. 14 is a view showing an example of transition from a TDO active operation state to a Web active operation state.
[Fig. 15]

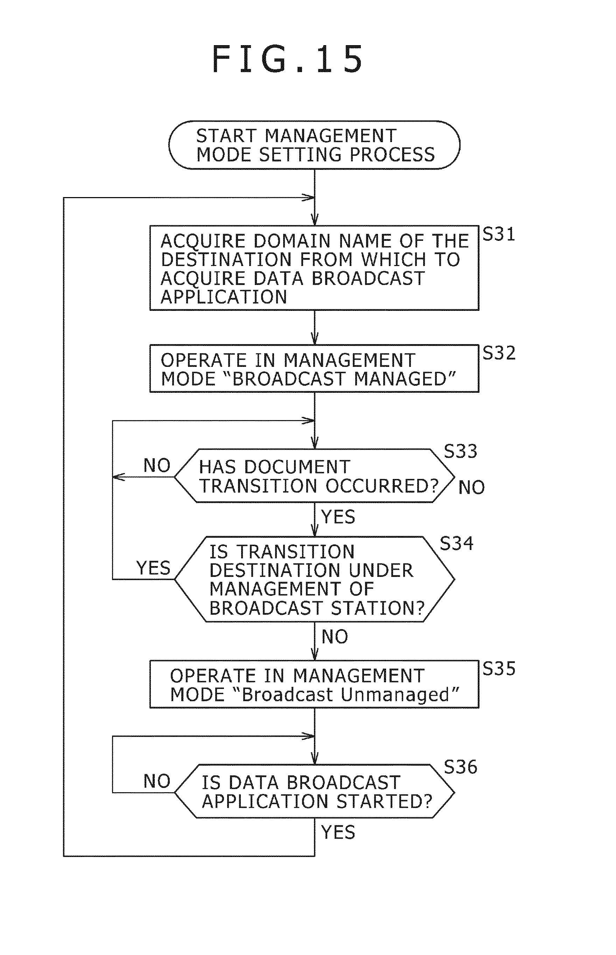

   Fig. 15 is a flowchart explaining a management mode setting process performed by the reception apparatus.
[Fig. 16]

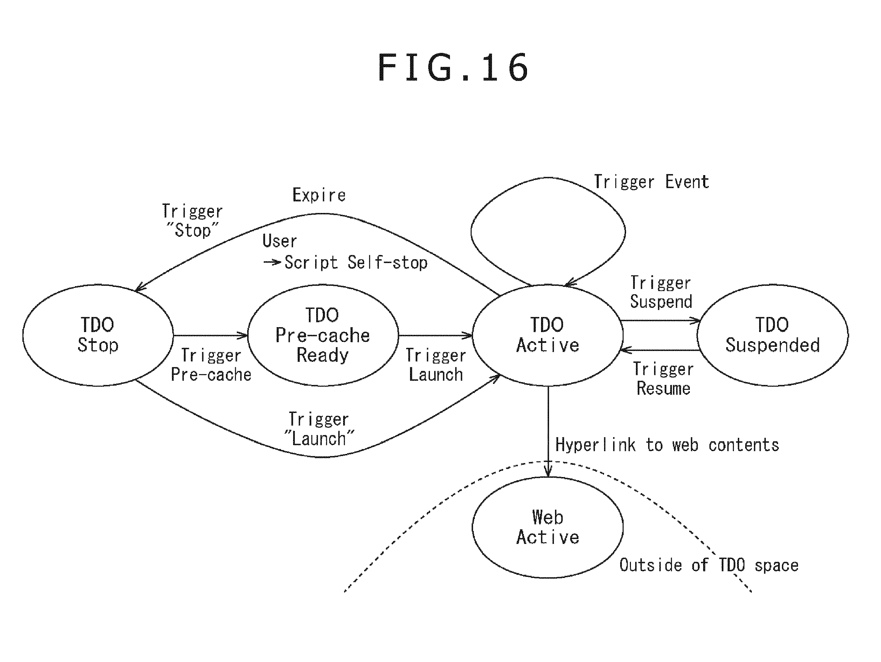

   Fig. 16 is another view showing another typical life cycle of the data broadcast HTML document.
[Fig. 17]

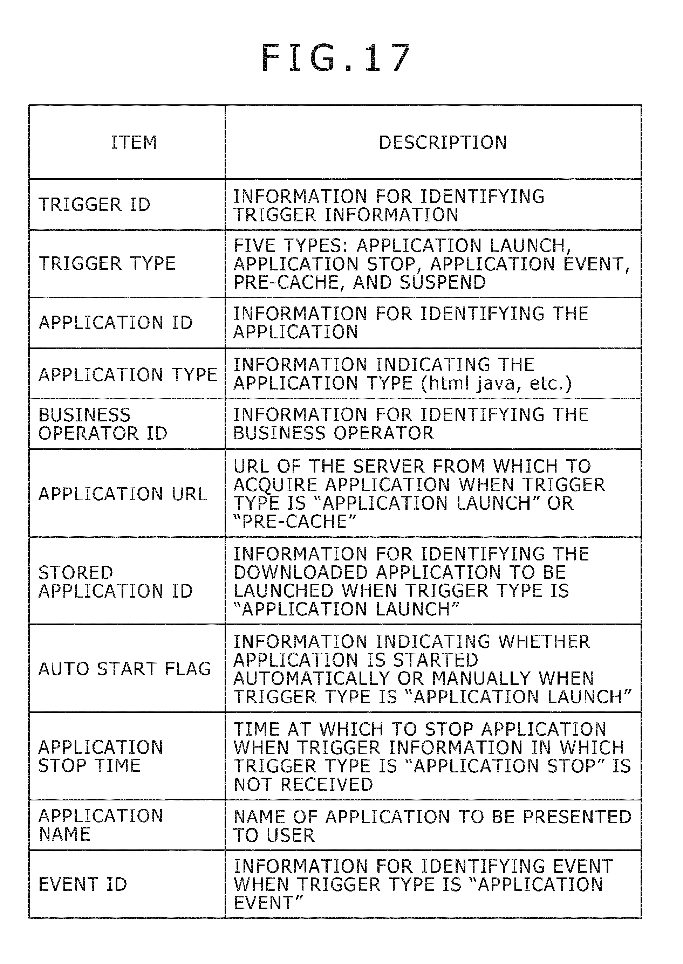

   Fig. 17 is another tabular view listing other typical information items included in the trigger information.
[Fig. 18]

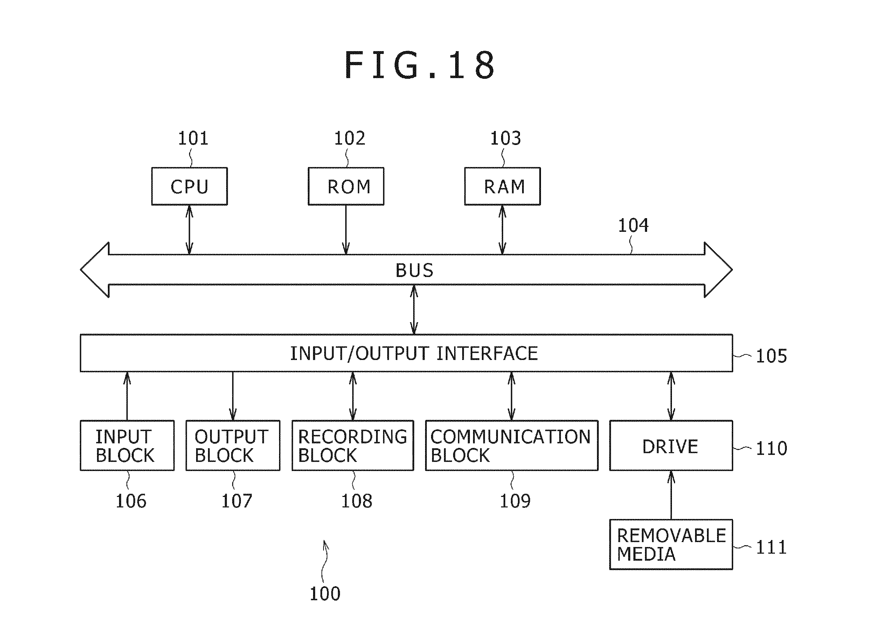

   Fig. 18 is a block diagram showing a typical structure of a computer.

### [Description of Embodiments]

### <1. Embodiments>

### [Typical configuration of the broadcasting system]

Fig. 2 shows a broadcasting system 1 as one embodiment of this invention. The broadcasting system 1 is constituted by a broadcast unit 11 and a server 12 set up on the side of a broadcasting organization and by a reception apparatus 30 installed on the viewer side.

The point of this invention is for the reception apparatus 30 to determine whether or not to permit (or restrict) a specific process to be implemented through execution of an HTML document depending on whether the HTML document, to be acquired and via the Internet 20 and executed, is managed by the broadcasting organization.

For example, if the reception apparatus 30 executes an HTML document managed by the broadcasting organization (e.g., an HTML document acquired form the server 12 set up on the side of the broadcasting organization), the reception apparatus 30 permits (does not restrict) the execution of a specific process based on the HTML document in question.

On the other hand, if the reception apparatus 30 executes an HTML document not managed by the broadcasting organization (e.g., an HTML document acquired from a server which is not managed by the broadcasting organization and which is connected to the Internet 20), the reception apparatus 30 does not permit (restricts) the execution of a specific process based on the HTML document in question. The point of this invention will be discussed later in detail by reference to Fig. 4.

The broadcast unit 11 transmits (broadcasts) a digital TV broadcast signal. It is assumed here that the broadcast band of this digital TV broadcast signal consists of a video band, an audio band, and a control information band and that there is no band on which to broadcast data broadcast content.

It is also assumed that at predetermined timings, the broadcast unit 11 transmits trigger information in packets containing PCR (Program Clock Reference; packets are called PCR packets hereunder) as part of the TS packets making up a TS (transport stream) of the digital TV broadcast signal.

In this context, the trigger information is composed of information indicating the timings for executing data broadcast HTML documents as the HTML documents to be executed to implement a data broadcast service, of information indicating the destinations from which to acquire the data broadcast HTML documents, and the like. The trigger information will be discussed later in detail by reference to Figs. 6 through 9.

The server 12 is managed by the broadcasting organization, and provides data broadcast HTML documents and the like in response to requests from the reception apparatus 30 accessing the server via the Internet 20.

The reception apparatus 30 receives the digital TV broadcast signal transmitted from the broadcast unit 11, acquires therefrom pictures and sounds ofAV content corresponding to a TV program, and outputs the pictures to a monitor (not shown) and the sounds to speakers (not shown).

Also, the reception apparatus 30 accesses the server 12 via the Internet 20 to acquire and execute data broadcast HTML documents. This enables the reception apparatus 30 to display a picture 43 made up of an AV content picture 41 superimposed with a data broadcast content picture 42, on the monitor, not shown.

This reception apparatus 30 may be either set up as a stand-alone unit or incorporated in a TV set or a video recorder for example. A detailed structure of the reception apparatus 30 will be discussed later by reference to Fig. 5.

### [Outline of this Invention]

Next, Fig. 4 outlines this invention.

The reception apparatus 30 displays the picture 43 as shown in Fig. 3 based on the trigger information included in the digital TV broadcast signal transmitted from the broadcast unit 11.

Specifically, for example, upon receipt of trigger information (e.g., corresponding to "Trigger "Start" from the air" in Fig. 4) from the broadcast unit 11, the reception apparatus 30 may acquire a data broadcast HTML document (e.g., corresponding to "Liner TV TDO content" on the "Internet" in Fig. 4) from the server 12 and execute the acquired document, or execute a data broadcast HTML document acquired beforehand from the server 12 and stored internally (e.g., corresponding to "Liner TV TDO content" in the "File system" in Fig. 4), thereby displaying the picture 43 as shown in Fig. 3 on the monitor, not shown.

In another example, the reception apparatus 30 may receive a TV program (digital TV broadcast signal) in advance from the broadcast unit 11, store the received program internally, and let the program be viewed using a download broadcast whereby stored programs are reproduced. In such a case, on acquiring the trigger information included in the stored program (e.g., corresponding to "Trigger "Start" from the Video files that is played by local player" in Fig. 4), the reception apparatus 30 may acquire a data broadcast HTML document (e.g., corresponding to "NRT TDO context" in Fig. 4) from the server 12, execute the acquired document, and execute another data broadcast HTML document acquired in advance from the broadcast unit 11 and stored internally (e.g., corresponding to "NRT TDO" in Fig. 4), thereby displaying the picture 43 as shown in Fig. 3.

In that case, it is assumed for example that the driver (face) displayed as the picture 42 in Fig. 3 carries a link to the driver's Web page that may be selected by the user.

If the user performs an operation to select the driver on the picture 42 in Fig. 4, the reception apparatus 30 acquires a Web page HTML document (e.g., "Generic Web Content" in Fig. 3) from a server other than the server 12 and executes the acquired document to display the driver's Web page or the like on the monitor, not shown. Web page HTML documents refer to the HTML documents held in servers (different from the server 12) not managed by the broadcasting organization.

Meanwhile, where the reception apparatus 30 executes data broadcast HTML documents, it may be necessary to perform specific processes needed to better implement the data broadcast service.

Specifically, if the reception apparatus 30 is to display weather reports on the user's residential area as the data broadcast service, the data broadcast HTML document needs to trigger the execution of particular processes such as the process of reading area information about the user's residential area from the reception apparatus 30 in which the information is pre-registered.

On the other hand, if the reception apparatus 30 is to display a Web page or the like, it is not desirable to let the Web page HTML document trigger specific processes.

For example, if a Web page or the like is to be displayed, the Web page HTML document is acquired from a server not managed by the broadcasting organization before getting executed. In this case, the server not managed by the broadcasting organization, unlike the server 12 managed thereby, may contain Web page HTML documents prepared by a malicious third party (such as an HTML document triggering the process of fraudulently reading the pre-registered area information from the reception apparatus 30 and feeding the read information to the server).

Thus the reception apparatus 30 sets a management mode in which the specific processes indicated to the left of a boundary line (thick line) in Fig. 4 may be performed and in which those to the right are prevented from getting performed. The reception apparatus 30 permits (or restricts) specific processes to be performed using HTML documents depending on the management mode being set.

The specific processes refer to the type of processes that may cause losses to the user when executed fraudulently by a malicious third party (such as the process of fraudulently acquiring the user's personal information and thereby threatening the user's safety).

These specific processes are defined in advance by the user and by the manufacturer manufacturing the reception apparatus 30, for example. In addition to the above-mentioned read process, the specific processes may include a channel selection process for selecting a channel, a recorder operation process for causing the reception apparatus 30 to make recordings or the like where the reception apparatus 30 functions as a video recorder, an acquisition process for acquiring program information about the currently selected TV program, and a bookmark control process for causing a particular URL (Uniform Resource Locator) to be bookmarked.

### [Typical structure of the reception apparatus 30]

Fig. 5 shows a typical structure of the reception apparatus 30. The reception apparatus 30 is made up of a tuner 61, a demultiplexing block 62, an audio decoder 63, an audio output block 64, a video decoder 65, a trigger detection block 66, a video output block 67, a control block 68, a memory 69, an operation block 70, a recording block 71, a communication interface 72, and a browser 73.

The tuner 61 receives and demodulates the digital TV broadcast signal corresponding to the channel selected by the user, and outputs the TS resulting from demodulation to the demultiplexing block 62. The demultiplexing block 62 demultiplexes the TS input from the tuner 61 into an audio coded signal, a video coded signal, and a control signal, and outputs these signals to the audio decoder 63, video decoder 65, and control block 68 respectively.

Furthermore, the demultiplexing block 62 extracts PCR packets containing trigger information from the TS and outputs the extracted packets to the control block 68.

The audio decoder 63 decodes the input audio coded signal and outputs the audio signal resulting from decoding to the audio output block 64. The audio output block 64 outputs the input audio signal to the subsequent stage (e.g., speakers).

The video decoder 65 decodes the input video coded signal and outputs the video signal resulting from decoding to the trigger detection block 66 and video output block 67.

The trigger detection block 66 continuously monitors the input video signal to detect the trigger information embedded in the video signal and supplies the detected trigger information to the control block 68. Alternatively, the trigger information may be transmitted embedded in the video signal of the AV content corresponding to the digital TV broadcast signal.

Thus when the trigger information embedded in the video signal is transmitted from the broadcast unit 11 to the reception apparatus 30, the trigger detection block 66 detects the trigger information embedded in the input video signal.

In the ensuing description, it is assumed that the trigger information is contained in PCR packets when transmitted. Explanations of the cases where the trigger information is transmitted embedded in the video signal will be omitted where redundant.

The video output block 67 outputs to the subsequent stage (e.g., a monitor) the video signal input from the video decoder 65. Also, the video output block 67 combines a data broadcast video signal (e.g., corresponding to the picture 42 in Fig. 3) input from the browser 73 with the video signal (e.g., corresponding to the picture 41 in Fig. 3) input from the video decoder 65, and outputs the resulting composite signal to the subsequent stage.

Furthermore, the video output block 67 outputs to the subsequent stage the video signal representing a Web page or the like input from the browser 73.

Incidentally, the output from the audio output block 64 and video output block 67 to the subsequent stage may be implemented using an HDMI (High-Definition Multimedia Interface), for example.

The control block 68 controls the blocks making up the reception apparatus 30 by executing relevant control programs recorded beforehand in the memory 69. Also, based on the trigger information input from the demultiplexing block 62 (or from the trigger detection block 66), the control block 68 controls acquisition of the data broadcast HTML document for implementing the data broadcast service linked to a TV program, execution (start) of the document, firing of events, and stop of the execution.

The memory 69 stores in advance the control programs to be executed by the control block 68. The control programs may be updated based on the update data acquired through the digital TV broadcast signal or over the Internet 20.

Also, the memory 69 has management mode information recorded therein as indicative of a management mode. The management mode is changed when the management mode information is rewritten. The management mode will be discussed later in detail by reference to Figs. 13 and 14. The operation block 70 accepts various operations made by the user and notifies the control block 68 of operation signals corresponding to these operations.

Where data broadcast HTML documents are distributed using the digital TV broadcast signal, the recording block 71 has the distributed data broadcast HTML documents retained on a recording medium incorporated therein.

The communication interface 72 under control of the browser 73 connects to the server 12 via the Internet 20. Then the communication interface 72 under control of the browser 73 acquires a data broadcast HTML document from the server 12 via the Internet 20 and supplies the acquired document to the browser 73.

Also, the communication interface 72 under control of the browser 73 may connect to a server other than the server 12 via the Internet 20. Then the communication interface 72 under control of the browser 73 may acquire a Web page HTML document from a server other than the server 12 via the Internet 20 and supply the acquired document to the browser 73.

The browser 73 under control of the control block 68 executes the data broadcast HTML document from the communication interface 72 to generate a data broadcast video signal and supplies the generated video signal to the video output block 67.

Also, the browser 73 under control of the control block 68 may execute the Web page HTML document from the communication interface 72 to generate a video signal indicating a Web page or the like and supply the generated video signal to the video output block 67.

### [Details of trigger information]

Fig. 6 illustrates the concept of trigger information being embedded in PCR packets of TS when transmitted. As shown in Fig. 6, the trigger information is embedded not in all PCR packets but in those PCR packets suitably timed solely for linkage with the AV content corresponding to TV programs.

Depending on the substance of trigger information, the same trigger information may be transmitted a plurality of times for fear that the transmitted trigger information might be lost and not received by the reception apparatus 30.

Fig. 7 shows where the trigger information is stored in a PCR packet. The PCR packet is a TS packet of which the "adaptation_field" contains a PCR. The trigger information (TriggerInfo_descriptor) is held in a "transport_private_deta_byte" that follows the PCR. When the trigger information is held in the packet, a "transport_private_deta_fag" in "Various_flags" preceding the PCR is set to "1."

Fig. 8 lists typical information items included in the trigger information.

An item "trigger ID" denotes information that identifies the trigger information in question. Where trigger information of the same substance is transmitted a plurality of number of times, the trigger ID of each set of trigger information is the same. An item "trigger type" indicates that this trigger information is of one of four types: application launch (designating the acquisition and execution of the data broadcast HTML document), application stop (designating a stop of the currently executing data broadcast HTML document), application event (designating firing of an event (e.g., display substance update) in the currently executing data broadcast HTML document), and pre-cache (designating only the acquisition of the data broadcast HTML document).

An item "application ID" denotes information that identifies the data broadcast HTML document corresponding to this trigger information. An item "application type" denotes information that indicates the type (html) of the data broadcast HTML document corresponding to this trigger information. An item "business operator ID" denotes information that identifies the business operator (e.g., broadcast station) performing the service of executing the data broadcast HTML document corresponding to this trigger information. An item "application URL (Uniform Resource Locator)" denotes the URL of the destination from which to acquire the data broadcast HTML document when the trigger type is "application launch" or "pre-cache." An item "stored application ID" is described only for designating the data broadcast HTML document which is to be launched and which has been stored (acquired) already, where the trigger type is "application launch" and where any data broadcast HTML document is not to be immediately acquired.

An item "auto start flag" is described when the trigger type is "application launch," the flag being set to be either on or off. When the auto start flag is set to be on, auto start (i.e., the data broadcast HTML document is automatically started) is in effect. When the auto start flag is set to be off, manual start (i.e., the user is prompted to make operation input and the document is started in response to the operation input having been made).

An item "application stop time" denotes information indicative of the time at which to stop the currently executing data broadcast HTML document when the trigger information of which the trigger type is "application stop" is not received.

An item "application name" denotes the name of the data broadcast service (implemented by the data broadcast HTML document) to be presented to the user when the "auto start flag" is set for manual start. An item "event ID" denotes information that identifies the event when the trigger type is "application event." It should be noted that not all items explained above are always included in the trigger information; only the items necessary for the timing in question are included.

Fig. 9 shows a typical syntax of the trigger information. The syntax of the trigger information is discretionary and is not limited to what is shown in Fig. 9.

### [About the trigger information handling process]

Explained next is the trigger information handling process to be performed by the reception apparatus 30 upon receipt of the trigger information.

Fig. 10 is a flowchart explaining the trigger information handling process. This trigger information handling process is carried out repeatedly while the user is viewing a TV program, i.e., while the digital TV broadcast signal is being received.

In step S1, based on the input from the demultiplexing block 62, the control block 68 waits for a PCR packet including trigger information to be received. Upon receipt of the PCR packet including the trigger information, control is passed to step S2.

In step S2, the control block 68 extracts the trigger information from the received PCR packet, and determines whether the processing subsequent to step S3 has already been completed based on the extracted trigger information. If it is determined that the processing subsequent to step S3 has already been completed, control is returned to step S 1 and the subsequent steps are repeated. On the other hand, if it is determined that the processing subsequent to step S3 has yet to be performed, control is passed to step S3.

In step S3, the control block 68 identifies the trigger type as "application launch," "application event," "application stop," or "pre-cache."

If in step S3 the trigger type of the trigger information in question is identified as "application launch," control is passed to step S4.

In step S4, the control block 68 determines whether a stored application ID is designated in this trigger information and whether the data broadcast HTML document corresponding to the designated ID has already been stored in the recording block 71.

If the result of the determination in step S4 is negative, control is passed to step S5. In step S5, the control block 68 controls the browser 73 to access the server 12 corresponding to the application URL in the trigger information so as to acquire the data broadcast HTML document corresponding to the application ID in the trigger information. If it turns out that the relevant data broadcast HTML document was already acquired from the server 12 corresponding to the above-mentioned URL and has been pre-cached in step S 14, to be discussed later, step S5 is skipped so that the document in question may be used in step S7 and subsequent steps. Thereafter, control is passed to step S7.

On the other hand, if it is determined in step S4 that the stored application ID is designated in this trigger information and that the data broadcast HTML document corresponding to the designated ID has already been stored in the recording block 71, control is passed to step S6. In step S6, the control block 68 controls the browser 73 to read from the recording block 71 the data broadcast HTML document corresponding to the stored application ID in the trigger information. Thereafter, control is passed to step S7.

In step S7, the control block 68 determines whether the auto start flag in the trigger information is set for auto start.

If in step S7 it is determined that the auto start flag in the trigger information is not set for auto start (i.e., set for manual start), control is passed to step S8. In step S8, the browser 73 under control of the control block 68 prompts the user to perform an operation to start the data broadcast HTML document (i.e., executing operation), by displaying a message "Do you want to execute "application (its name) ?" or the like on the screen. If it is determined in step S9 that the user has input the starting operation in response to the prompt display, control is passed to step S11. In step S11, the browser 73 under control of the control block 68 starts (executes) the data broadcast HTML document acquired in step S5 or read out in step S6. Thereafter, control is returned to step S 1 and the subsequent steps are repeated.

In step S9 following the prompt display in step S8, it is determined whether the user has input the starting operation. If in step S9 it is determined that the user has not input the starting operation and if in step S10 it is determined that a predetermined time period has elapsed, then control is returned to step S 1 and the subsequent steps are repeated.

If in step S7 it is determined that the auto start flag in the trigger information is set for auto start, control is passed to step S11. In step S11, the browser 73 under control of the control block 68 starts the data broadcast HTML document acquired in step S5 or read out in step S6. Thereafter, control is returned to step S 1 and the subsequent steps are repeated.

If in step S3 it is determined that the trigger type of this trigger information is "application event," control is passed to step S12. In step S12, the control block 68 controls the browser 73 to fire (i.e., execute) that event on the currently executing HTML document which corresponds to the event ID in the trigger information only if the application ID of this trigger information coincides with the application ID of the currently executing data broadcast HTML document. Thereafter, control is returned to step S1 and the subsequent steps are repeated.

If in step S3 it is determined that the trigger type of this trigger information is "application stop," control is passed to step S13. In step S13, the control block 68 controls the browser 73 to stop the currently executing data broadcast HTML document only if the application ID of this trigger information coincides with the application ID of the currently executing data broadcast HTML document. Thereafter, control is returned to step S 1 and the subsequent steps are repeated.

Even if the trigger information of which the trigger type is "application stop" is not received, once the current time has reached the "application stop time" described in the trigger information that started the currently executing data broadcast HTML document, the ongoing data broadcast HTML document is stopped.

If in step S3 it is determined that the trigger type of this trigger information is "pre-cache," control is passed to step S14. In step S14, the control block 68 controls the browser 73 to access the server 12 corresponding to the application URL in the trigger information so as to acquire the data broadcast HTML document corresponding to the application ID in the trigger information and store (pre-cache) the acquired document into storage means such as a cache memory contained in the browser 73. Thereafter, control is returned to step S1 and the subsequent steps are repeated.

If the trigger type is "pre-cache" as in the case of step S 14, it is possible to acquire the relevant data broadcast HTML document prior to the broadcast time of the TV program to be linked. In this manner, the moment the TV program to be linked is started, the corresponding data broadcast HTML document can be executed immediately. This paragraph completes the explanation of the trigger information handling process.

### [Typical screen displays in effect upon execution of the data broadcast HTML document]

Fig. 11 shows typical screen transitions in effect when, with the auto start flag in the trigger information set to be off (i.e., manual start), a data broadcast HTML document is executed in linkage with the progress of a TV program.

Upon receipt of the trigger information of which the trigger type is "application launch" and of which the auto start flag is off (manual start) while the user is viewing a TV program, the corresponding data broadcast HTML document (corresponding to HTML in Fig. 11) is acquired. Then a display (corresponding to "App Start?" in Fig. 11) prompting the user to make an operation to start the data broadcast HTML document is displayed superimposed on the picture of the TV program. When the user inputs the starting operation in response to the prompt, the data broadcast HTML document is executed. This turns the screen display into the composite picture 43 as shown in Fig. 3 for example, with the data broadcast content picture 42 superimposed on the TV program picture 41.

If the trigger information of which the trigger type is "application event" is received while the data broadcast HTML document is being executed, the event corresponding to the event ID in the trigger information is fired on the currently executing data broadcast HTML document. This operation changes, on the screen display, what is shown in a data broadcast content display area (e.g., area where the picture 42 is displayed in Fig. 3) to the picture corresponding to the event ID in the trigger information (e.g., information 1 is changed to information 2, information 2 is changed to information 3, etc.).

Thereafter, upon receipt of the trigger information of which the trigger type is "application stop," the currently executing data broadcast HTML document is terminated, and solely the TV program picture 41 is displayed full screen.

### [Other typical screen displays in effect upon execution of the data broadcast HTML document]

Meanwhile, the data broadcast HTML document executed in linkage with the progress of the TV program may not necessarily entail screen display. This type of data broadcast HTML document can be executed without letting the user of the reception apparatus 30 know that a data broadcast HTML document is being executed. This type of data broadcast HTML document may be applied when audience research is conducted on TV programs, for example. Specifically, whether or not a given TV program is being viewed may be recorded given the trigger information of which the trigger type is "application event," and the recorded result may be sent to a predetermined server in a suitably timed manner. This makes it possible to check the ratings of TV programs at intervals in which the trigger information of which the trigger type is "application event" is transmitted.

Fig. 12 shows typical screen transitions in effect when, with the auto start flag in the trigger information set to be on (auto start), a data broadcast HTML document not entailing screen display is executed in linkage with the progress of a TV program.

Upon receipt of the trigger information of which the trigger type is "application launch" and of which the auto start flag is set to be on (for auto start) while the user is viewing a TV program, the corresponding data broadcast HTML document is acquired and executed. It should be noted here that solely the TV program picture 41 remains displayed on the screen.

Upon receipt of the trigger information of which the trigger type is "application event" while the data broadcast HTML document is being executed, the event corresponding to the event ID in the trigger information is fired on the currently executing data broadcast HTML document. In this case, too, only the TV program picture 41 remains displayed on the screen.

Thereafter, upon receipt of the trigger information of which the trigger type is "application stop," the currently executing data broadcast HTML document is terminated.

### [Life cycle of the data broadcast content]

A typical life cycle of the data broadcast HTML document is explained below in reference to Fig. 13.

Upon receipt of the trigger information of which the trigger type is "application launch" when the data broadcast HTML document to be acquired and executed by the reception apparatus 30 is in a TDO stop operation state (corresponding to "TDO Stop" in Fig. 13), i.e., when the reception apparatus 30 has yet to acquire the data broadcast HTML document, transition occurs from the TDO stop operation state to a TDO active operation state (corresponding to "TDO Active" in Fig. 13), and the data broadcast HTML document is acquired from the server 12.

And a display prompting the user to perform an operation to start the data broadcast HTML document appears superimposed on the TV program picture. When the user inputs the starting operation in response to the prompt, the data broadcast HTML document is started. Then as shown in Fig. 3, the composite picture 43 is displayed on the screen with the data broadcast content picture 42 superimposed on the TV program picture 41, for example.

In the TDO active operation state, the acquired data broadcast HTML document enables the reception apparatus 30 to perform a specific process so as to display the data broadcast content picture 42. That is, in the TDO active operation state, the management mode of the reception apparatus 30 is set for "Broadcast managed" in which the specific process is allowed to be performed using the data broadcast HTML document acquired from the server 12 managed by the broadcasting organization.

Upon receipt of the trigger information of which the trigger type is "application event" in the TDO active operation state, the event corresponding to the event ID in the trigger information is fired on the currently executing data broadcast HTML document.

In the TDO active operation state, if the trigger information of which the trigger type is "application stop" is received or if the application stop time is reached, transition occurs from the TDO active operation state to the TDO stop operation state. The acquired data broadcast HTML document is discarded here for example.

Also, upon receipt of the trigger information of which the trigger type is "pre-cache" in the TDO stop operation state, transition occurs from the TDO stop operation state to a TDO pre-cache ready operation state. The corresponding data broadcast HTML document is acquired and pre-cached here for example.

And upon receipt of the trigger information of which the trigger type is "application launch" in the TDO pre-cache ready operation state, transition occurs from the TDO pre-cache ready operation state to the TDO active operation state. In the TDO active operation state, the pre-cached data broadcast HTML document is started.

Also in the TDO active operation state, if the user presses a button, etc., linked to a carmaker's Web page or the like, transition occurs from the TDO active operation state to a Web active operation state (corresponding to "Web Active" in Fig. 13). In the Web active operation state, a Web page HTML document from a server (other than the server 12) not managed by the broadcasting organization is executed, whereby the carmaker's Web page or the like is displayed.

In the Web active operation state, the reception apparatus 30 is not allowed to perform specific processes using the acquired Web page HTML document. That is, in the Web active operation state, the management mode of the reception apparatus 30 is set for "Broadcast unmanaged" in which the specific processes cannot be performed using the Web page HTML document acquired from a server (other than the server 12) not managed by the broadcasting organization.

In the TDO active operation state (where the management mode is set for "Broadcast managed"), it is necessary to make arrangements for performing specific processes such as the reading of pre-recorded area information from the reception apparatus 30 in order to provide the data broadcast service.

On the other hand, in the Web active operation state (where the management mode is set for "Broadcast unmanaged"), it is necessary to make arrangements for inhibiting specific processes so that such processes as the reading of pre-recorded area information from the reception apparatus 30 will not be fraudulently carried out to make illicit leakage.

Thus when the HTML document to be executed is acquired from the server 12 managed by the broadcasting organization, the reception apparatus 30 has the management mode set for "Broadcast managed" in which specific processes are allowed to be performed, as discussed above.

On the other hand, when the HTML document to be executed is acquired from a server not managed by the broadcasting organization, the reception apparatus 30 has the management mode set for "Broadcast unmanaged" in which specific processes are inhibited.

### [About the management mode]

Fig. 14 shows an example of transition occurring from the TDO active operation state to the Web active operation state while events are being fired one after another in the TDO active operation state, i.e., when the management is set from "Broadcast managed" to "Broadcast unmanaged."

It is assumed here that in each data broadcast HTML document, the URL identifying the HTML document to be executed to update the data broadcast content picture 42 is described in linkage with an event ID.

With the above description in place, upon receipt of the trigger information of which the trigger type is "application event," an HTML document "al.html" for executing the event identified by the event ID included in the trigger information is acquired and executed based on a URL "http://www.a.com/al.html" described in the data broadcast HTML document.

Furthermore, when the trigger information of which the trigger type is "application event" is received anew, an HTML document "a2.html" for executing the event identified by the event ID included in that trigger information is acquired and executed based on a URL "http://www.a.com/a2.html" described in the data broadcast HTML document. This causes the display of the picture 42 to be successively updated with the picture displayed by execution of the HTML document "a 1.html" and with the picture displayed by execution of the HTML document "a2.html."

Also, it is assumed that the data broadcast HTML document describes in it a destination "http://www.b.com/b1.html" linked to the HTML document "b1.html" to be executed when the user performs an operation to select the driver's picture displayed in the data broadcast content picture 42 (Fig. 3).

If the user performs an operation to select the driver's picture displayed in the picture 42 (Fig. 3) in the TDO active operation state, transition occurs from the TDO active operation state to the Web active operation state.

In that Web active operation state, based on the link destination "http://www.b.com/b1.html," the reception apparatus 30 acquires the Web page HTML document "b1.html" from a server not managed by the broadcasting organization and executes the acquired document.

As shown in Fig. 14, where some HTML documents targeted for execution are to be acquired from the server 12 and executed in the TDO active operation state, for example, the HTML documents ("a1.html" and "a2.html" in this case) are each acquired from the server 12 ("http://www.a.com/" in this case) managed by the broadcasting organization.

Also in the Web active operation state, for example, another HTML document ("b1.html" in this case) target for execution is acquired from a server ("http://www.b.com/ in this case) not managed by the broadcasting organization.

As explained above, when HTML documents are to be acquired from the server 12 for execution, it is necessary to make arrangements for permitting specific processes to be performed; when HTML documents are to be acquired from a server other than the server 12 for execution, arrangements need to be made to inhibit specific processes.

Then the reception apparatus 30 determines whether a given HTML document targeted for execution is acquired from the server 12 by verifying whether the domain name of the server 12 managed by the broadcasting organization coincides with the domain name of the destination from which the HTML document in question is acquired.

Incidentally, in implementing the data broadcast service the reception apparatus 30 determines whether a given HTML document targeted for execution is acquired from the server 13 by regarding the domain name of the destination from which the first HTML document is acquired, i.e., from which the data broadcast HTML document is acquired ("www.a.com" in this case), as the domain name of the server 12 managed by the broadcasting organization.

Based on whether or not the domain name of the HTML document as the destination of transition is the domain name of the server 12 managed by the broadcasting organization, the reception apparatus 30 sets the management mode for either "broadcast managed" or "broadcast unmanaged."

And when the management mode is set for "broadcast managed" (i.e., in the TDO active operation state), the reception apparatus 30 can perform specific processes; when the management mode is set for "broadcast unmanaged" (in the Web active operation state), the reception apparatus 30 cannot perform specific processes.

Whereas in implementing the data broadcast service, the reception apparatus 30 regards the domain name of the destination from which the data broadcast HTML document is acquired as the domain name of the server 12 managed by the broadcasting organization, it is also possible alternatively to retain in advance the domain name of the server managed by each broadcaster corresponding to each channel to be received.

Then the reception apparatus 30 may select, from among the domain names retained beforehand, the domain name of the received channel and regard that domain name as the domain name of the server managed by the broadcasting organization.

As another alternative, whereas the reception apparatus 30 uses the domain names to determine whether a given HTML document targeted for execution is acquired from the server 12, any other information may be utilized for the purpose as long as the information in question uniquely identifies the server of the destination from which the document is acquired. For example, in addition to the domain names, the reception apparatus 30 may use MAC (Media Access Control) addresses, IP (Internet Protocol) addresses, etc., to determine whether the HTML document targeted for execution is acquired from the server 12.

### [Details of the management mode setting process]

Explained below in reference to the flowchart of Fig. 15 is the management mode setting process performed by the reception apparatus 30 for setting the management mode based on the domain name of the destination from which the HTML document is acquired.

The management mode setting process is started, for example, when the data broadcast HTML document is started in step S11 of Fig. 10.

In step S31, the control block 68 acquires the domain name of the destination from which the data broadcast HTML document to be started is obtained.

That is, if the data broadcast HTML document to be started was acquired in step S5 or S 14 of Fig. 10 based on the application URL in the trigger information for example, the control block 68 obtains the domain name of the destination (server 12) from which to acquire the data broadcast HTML document to be started based on the application URL in the trigger information.

As another example, if the data broadcast HTML document to be started was read from the recording block 71 in step S6 of Fig. 10, the control block 68 controls the browser 73 to acquire the domain name of the server 12 that holds the data broadcast HTML document to be started and feed the acquired domain name to the control block 68. In this manner, the control block 68 obtains the domain name. Incidentally, if a data broadcast HTML document is to be recorded in the recording block 71, the domain name of the server 12 that holds the data broadcast HTML document in question is assumed to be recorded in association with the HTML document.

In step S32, the control block 68 controls the browser 73 to operate in the management mode "Broadcast Managed" in which specific processes are allowed to be performed. That is, the control block 68 controls the execution of HTML documents by the browser 73 in a manner permitting (not restricting) the specific processes to be carried out through HTML document execution.

In step S33, the control block 68 determines whether a document transition has occurred involving HTML documents on the basis of the input trigger information, control signals from the operation block 70, or the like. Once it is determined that a document transition has taken place, control is passed to step S34.

In step S34, the control block 68 determines whether the HTML document as the transition destination is acquired from the server 12 managed by the broadcasting organization, based on whether the domain name of the destination from which the HTML document as the transition destination is obtained coincides with the domain name acquired in step S31. If in step S34 it is determined that the HTML document as the transition destination is acquired from the server 12, control is returned to step S33 and the subsequent steps are repeated with the browser 73 allowed to keep operating in the management mode "Broadcast Managed."

And if in step S34 it is determined that the HTML document as the transition destination is not acquired from the server 12, control is passed to step S35. The control block 68 then controls the browser 73 to operate in the management mode "Broadcast unmanaged" in which specific processes are not allowed to be performed. That is, the control block 68 controls the execution of HTML documents by the browser 73 in a manner not permitting (restricting) the specific processes to be carried out through HTML document execution.

In that case, the browser 73 in step S35 cannot perform the specific processes and may execute, for example, a Web page HTML document as the HTML document to which transition is made. Incidentally, it is assumed that during execution of the Web page HTML document, the data broadcast HTML document is terminated based on the trigger information of which the trigger type is "application stop."

Thereafter, in step S36, the control block 68 determines whether or not to start a new data broadcast HTML document. If it is determined that the data broadcast HTML document is to be started anew, control is returned to step S31 and the subsequent steps are repeated. For example, the control block 68 determines whether trigger information is input for starting a data broadcast HTML document anew. Once it is determined that such trigger information is input, control is returned to step S31 and the subsequent steps are repeated.

As explained above, in the management mode transition process, if the domain name of the data broadcast HTML document coincides with the domain name of the HTML document as the transition destination, the management mode is set for "Broadcast managed"; if the domain name of the data broadcast HTML document does not coincide with the domain name of the HTML document as the transition destination, the management mode is set for "Broadcast unmanaged."

And where the management mode is set for "Broadcast managed," such processes as the reading of the user's pre-recorded area information from the reception apparatus 30 are carried out through execution of the data broadcast HTML document. Where the management mode is set for "Broadcast unmanaged," the processes not intended by the user such as the read process will not be performed through execution of the Web page HTML document.

Thus even if a Web page HTML document prepared by a malicious third party is acquired and executed, the processes not intended by the user are inhibited from getting performed.

### <2. Variations>

In the above-described embodiment, as shown in Fig. 13, the operation state of the data broadcast HTML document is one of four states: TDO stop operation state, TDO pre-cache ready operation state, TDO active state, and Web active state. Alternatively, as shown in Fig. 16, there may be added a TDO suspended operation state (corresponding to "TDO Suspend" in Fig. 16) to the existing four operation states, so that there may be five operation states in total.

In this case, as shown in Fig. 17, a new trigger type "suspend" is added as part of the trigger information. Thus the trigger type in the trigger information may denote one of five types: application launch, application stop, application event, pre-cache, and suspend.

In Fig. 16, upon receipt of the trigger information of which the trigger type is "suspend" in the TDO active operation state, the operation state of the corresponding data broadcast HTML document makes transition to the TDO suspended operation state. In this case, with the corresponding data broadcast HTML document having transitioned to the TDO suspended operation state, other data broadcast HTML documents may be placed in the TDO active operation state and executed.

Upon receipt of the trigger information of which the trigger type is "application launch" in the TDO suspended operation state, the corresponding data broadcast HTML document makes transition to the TDO active operation state. This makes it possible to fire events on the data broadcast HTML document. At this point, any other data broadcast HTML document is caused to make transition from the TDO active operation state to the TDO suspended operation state.

Incidentally, the series of processes described above may be executed either by hardware or by software. Where the software-based series of processing is to be carried out, the programs constituting the software may be either incorporated beforehand in the dedicated hardware of the computer to be used or installed upon use from a suitable program recording medium into a general-purpose personal computer or like equipment capable of executing diverse functions based on the installed programs.

### [Typical structure of the computer]

Fig. 18 is a block diagram showing a typical structure of a computer that performs the above-described series of processes using programs.

In this computer 100, a CPU (Central Processing Unit) 101, a ROM (Read Only Memory) 102, and a RAM (Random Access Memory) 103 are interconnected via a bus 104.

An input/output interface 105 is further connected to the bus 104. The input/output interface 105 is connected with an input block 106 typically made of a keyboard, a mouse and a microphone; an output block 107 generally composed of a display and speakers; a storage block 108 usually formed by a hard disk, a nonvolatile memory or the like; a communication block 109 typically constituted by a network interface; and a drive 110 that drives removable media 111 such as magnetic disks, optical disks, magneto-optical disks, or semiconductor memories.

In the computer structured as outlined above, the CPU 101 performs the above-described series of processes by loading relevant programs from, say, the storage block 108 through the input/output interface 105 and bus 105 into the RAM 108 for execution.

Incidentally, the programs to be executed by the computer may be processed in the depicted sequence of this specification (i.e., on a time series basis), in parallel, or in otherwise appropriately timed fashion such as when they are invoked as needed.

Also, the programs may be processed by a single computer or by a plurality of computers on a distributed basis. The programs may also be transferred to a remote computer or computers for execution.

In this specification, the term "system" refers to an entire configuration made up of a plurality of component devices.

Also, it should be understood that this invention when embodied is not limited to the above-described embodiments and that various modifications, variations and alternatives may be made of this invention so far as they are within the spirit and scope thereof.

### [Reference Signs List]

1 Broadcasting system
11 Broadcast unit
12 Server
30 Reception apparatus
61 Tuner
62 Demultiplexing block
63 Audio decoder
64 Audio output block
65 Video decoder
66 Trigger detection block
67 Video output block
68 Control block
69 Memory
70 Operation block
71 Recording block
72 Communication interface
73 Browser

## Claims

1. A reception apparatus for receiving AV content, comprising:
acquisition means for acquiring a description document described in a programming language for displaying content from a server to which said reception apparatus is connected on a network;
determination means for determining whether the acquired description document is from a first server managed by a broadcasting organization broadcasting said AV content; and
control means for controlling the execution of said acquired description document in accordance with a result of the determination made by said determination means.

2. The reception apparatus according to claim 1, further comprising extraction means for extracting from said AV content trigger information about said description document to be executed in linkage with the progress of said AV content;
wherein, based on said trigger information, said acquisition means acquires said description document from said first server, and
wherein, in response to an operation performed by a user, said acquisition means acquires said description document from a second server not managed by said broadcasting organization.

3. The reception apparatus according to claim 2, wherein said determination means determines whether said acquired description document is from said first server depending on whether first identification information identifying said first server coincides with second identification information identifying the server from which said description document is acquired.

4. The reception apparatus according to claim 3, further comprising determination means for determining as said first identification information the identification information identifying the destination from which to acquire said description document to be first executed in linkage with the progress of said AV content.

5. The reception apparatus according to claim 1, further comprising execution means for executing said acquired description document;
wherein, if said determination means determines that said description document is acquired from said first server managed by said broadcasting organization, said control means controls said execution means to operate in a first management mode in which a predetermined specific process can be processed through execution of said description document, and
wherein, if said determination means determines that said description document is not acquired from said first server managed by said broadcasting organization, said control means controls said execution means to operate in a second management mode in which said predetermined specific process cannot be processed through execution of said description document.

6. The reception apparatus according to claim 5, wherein, if said execution means is operating in said first management mode, said determination means determines, every time said description document is acquired, whether the acquired description document is from said first server, and
wherein, if said determination means determines that said description document is not acquired from said first server, said control means controls said execution means to exit said first management mode and operate in said second management mode.

7. The reception apparatus according to claim 5, wherein, if said execution means is operating in said second operation mode, said control means controls said execution means to exit said second management mode and operate in said first management mode when said execution means executes said description document acquired from said first server.

8. A reception method for use with a reception apparatus receiving AV content, said reception method comprising:
an acquisition step for causing said reception apparatus to acquire a description document described in a programming language for displaying content from a server to which said reception apparatus is connected on a network;
a determination step for determining whether the acquired description document is from a first server managed by a broadcasting organization broadcasting said AV content; and
a control step for controlling the execution of said acquired description document in accordance with a result of the determination made by said determination means.

9. A program for controlling a reception apparatus receiving AV content, said program causing a computer of said reception apparatus to execute a process comprising:
an acquisition step for acquiring a description document described in a programming language for displaying content from a server to which said reception apparatus is connected on a network;
a determination step for determining whether the acquired description document is from a first server managed by a broadcasting organization broadcasting said AV content; and
a control step for controlling the execution of said acquired description document in accordance with a result of the determination made by said determination means.

10. A broadcasting system comprising a transmission apparatus transmitting AV content and a reception apparatus receiving the transmitted AV content;
wherein said transmission apparatus includes:
transmission means for transmitting trigger information included in said AV content from a server to which said reception apparatus is connected on a network, said trigger information being about a description document described in a programming language for displaying content, said description document being executed by said reception apparatus in linkage with the progress of said AV content, and
wherein said reception apparatus includes:
extraction means for extracting said trigger information from said AV content;
acquisition means for acquiring, based on the extracted trigger information, said description document from a first server managed by a broadcasting organization broadcasting said AV content, said acquisition means further acquiring, in response to an operation performed by a user, said description document from a second server not managed by said broadcasting organization;
determination means for determining whether said acquired description document is from said first server, and
control means for controlling the execution of said acquired description document in accordance with a result of the determination made by said determination means.
